# EUROPEAN PATENT APPLICATION

(11) **EP 4 799 712 A1**
(43) Date of publication of application: **02.09.2026**
(21) Application number: 25160281.9
(22) Date of filing: 26.02.2025
(51) Int. Cl.: B01D 29/00, B01D 29/33, B01D 29/58

(54) **FILTER CARTRIDGE**

(71) Applicant: Gopala AG, 8280 Kreuzlingen (CH); LOTUS VITA GmbH & Co. KG, 79206 Breisach am Rhein (DE)
(72) Inventor: Wolf, Michael, 8280 Kreuzlingen (CH)
(74) Representative: Weickmann & Weickmann PartmbB

(57) **Abstract**

This invention relates to gravity-based water filtration systems, and in particular to systems for filtering water for personal consumption.

## Description

### BACKGROUND

This invention relates to gravity-based water filtration systems, and in particular to systems for filtering water for personal use.

Gravity-based systems often comprise a hopper that receives a charge of water to be filtered, and a storage tank that collects filtered water. A filtration cartridge connects the hopper and the storage tank, and enables the flow of water through one or more filtration media from the hopper to the storage tank.

In use, the hopper is filled with water, typically common tap water. As water flows from the hopper into the storage tank, it is purified by the filtration media to remove, for example, rust, dust, unpleasant odors, heavy metals, and other impurities or pollutants in the water. The water usually flows from the hopper to the storage tank solely due to gravity, and so the filtration process can take several minutes or longer, depending on the design of the filter, the chambers, etc. As a result, gravity-based water filtration systems are often "batch" processors, as the hopper and storage tank are dimensioned so that the hopper has a smaller capacity than the storage tank. Filtered water can then be drawn from the storage tank as needed, while the hopper can be refilled at any time.

To provide drinking water of high quality, the water is often passed through a filtration cartridge comprising one or multiple filtration elements on its way from the hopper to the storage tank.

If a ceramic filter or another filtration element with a small pore size is used in a fixed combination with a filtration element having a higher water permeability, pressure differences may arise within the filtration cartridge thereby reducing the water flow rate during use.

If such a filtration cartridge extends into the storage tank and the water level rises counter to the filtration direction and the filtration cartridge upon filling, a counterpressure is generated by the rising water in the storage tank against the gravitational flow of the filtered water within the filtration cartridge. Without pressure equalization, this results in counterpressure within the filtration cartridge, which stops the water flow.

Therefore, the objective of the present invention is to provide a filtration cartridge that, when used in a fixed combination with a fine-pored ceramic filter, prevents undesirable pressure differences within the cartridge and ensures a continuous water flow.

### SUMMARY OF THE INVENTION

A first aspect of the invention relates to a gravity-based water filtration cartridge comprising:
- a cartridge body (10) comprising a holder (12) at its top for attachment of a first filtration element (14), a sidewall (16) enclosing the cartridge body (10), and optionally a connection port (20) at its bottom;
- a first filtration element (14) for receiving unfiltered water, wherein the first filtration element is adapted for being tightly fitted to the holder (12);
- a second filtration element (24) for receiving water from the first filtration element (14), wherein the second filtration element (24) is positioned within the cartridge body (10) and wherein the water permeability of first filtration element (14) is lower than the water permeability of the second filtration element (24); and
- a pressure equalization chamber (30) within the cartridge body (10) below the first filtration element (14) and above the second filtration element (24) wherein the sidewall (16) enclosing the chamber (30) comprises at least one opening (32a, 32b) extending from the chamber (30) through the sidewall (16) such that pressure equalization between the chamber (30) and the outside of the cartridge body (10) is provided.

The filtration cartridge may be inserted into a container thereby providing a device for purifying water. For this purpose, the cartridge body (10) may comprise with an adaptor element (18) at the outside of the sidewall (16) for providing a watertight fitting of the cartridge within the container. The connection port (20) may be used for connecting the cartridge to an optional further element (22).

A further aspect of the present invention relates to a device for purifying water, comprising a hopper (38) for receiving unfiltered water, a filtration cartridge as described above for receiving water from the hopper, and a storage tank (40) for collecting filtered water.

A further aspect of the present invention relates to the use of a filtration cartridge or device as described above for purifying water for drinking purposes.

A further aspect of the present invention relates to s method for purifying water, comprising passing water through a filtration cartridge as described above and collecting the purified water exiting from the filtration cartridge.

A further aspect of the present invention relates to a flexible seal for attaching a filtration element, particularly a ceramic filter, to the top of a filtration cartridge.

A further aspect the present invention relates to a microporous filter, particularly a ceramic filter, adapted for attachment to a filtration cartridge via a flexible seal.

### BRIEF DESCRIPTION OF THE DRAWINGS

**Figure 1** shows a cross-sectional side view of a gravity-based filtration cartridge of the present invention.
**Figure 2** shows a side view of a gravity-based filtration cartridge with a first filtration element attached to the body of the filtration cartridge via a flexible seal.
**Figure 3** shows a partly cross-sectional side view of a gravity-based filtration cartridge inserted into a container.
**Figures 4a** and **4b** show a flexible seal for attaching a first filtration element to the cartridge body.
**Figure 5** shows an embodiment of a ceramic filter adapted for use as a first filtration element in the filtration cartridge of the present invention.

### DETAILED DESCRIPTION

According to the present invention, a gravity-based water filtration cartridge is provided. The cartridge comprises a cartridge body enclosed by a sidewall, a first filtration element and a second filtration element, wherein the first filtration element is positioned above the second filtration element and wherein the water permeability of first filtration element is lower than the water permeability of the second filtration element.

The filtration cartridge may be placed into a container. In certain embodiments, an adapter element, e.g. a ring of a flexible material such as silicone is provided on the outside of the cartridge body.

When the cartridge is in use, water first passes through the first filtration element and then through the second filtration element. Due to the different water permeabilities of the first and second filtration elements, a pressure difference may arise within the cartridge. According to the present invention, a pressure equalization chamber is provided within the cartridge body. The pressure equalization chamber is positioned below the first filtration element and above the second filtration element and defined by the sidewall of the cartridge body. The sidewall enclosing the chamber comprises at least one opening extending from the chamber through the sidewall to its outside such that pressure equalization between the chamber and the outside of the cartridge body is provided. Thereby, a smooth operation of the filtration cartridge is enabled where the water flow rate through the cartridge is not negatively affected by the buildup of pressure differences.

The cartridge of the present invention has a high overall flow-through capacity which may be about 2 to 18 I per hour (based on a filter cartridge area of 44 cm²).

In certain embodiments, the at least one opening in the sidewall is positioned in the upper portion of the chamber such that it is above the normal water level in the chamber and outflow of water through the sidewall is reduced or prevented during use. Since the opening exclusively serves as means for pressure equalization, it can be small such as to reduce or prevent passage of water from the chamber to the outside.

In certain embodiments, the opening has a diameter of about 1 mm or less, e.g. about 0.5 to about 1 mm on the inside of the sidewall. The diameter of the opening may increase in the direction from the inside to the outside of the sidewall. For example, the opening may have a conical shape with the narrow portion of the cone being on the inside of the sidewall. The opening may also be directed upwards from the inside to the outside of the sidewall thereby further reducing passage of water from the chamber to the outside.

In certain embodiments, the pressure equalization chamber may comprise an additional filtration element, particularly a limescale filter, which is positioned at the bottom of the chamber such that the at least one opening is not covered by the additional filtration element.

The water permeability of the first filtration element is necessarily lower than the water permeability of the second filtration element. In certain embodiments, the water permeability of the first filtration element is at least two times lower and particularly at least three times lower than the water permeability of the second filtration element.

In certain embodiments, the first filtration element is removably attached to the filtration cartridge and can be tightly fitted to the cartridge body via a holder provided on the cartridge body. In particular embodiments, the first filtration element is fitted to the holder via a flexible seal as described in detail below.

The first filtration element may comprise a microporous filter which is suitable for removing undissolved substances from water. The pore size may be about 100 µm or less, particularly about 0.1 to about 50 µm and more particularly about 0.4 to about 20 µm, e.g. about 10 µm. The first filtration element may be e.g., a ceramic filter, an ultrafiltration membrane or a micro sponge. In even more particular embodiments, the first filtration element is a ceramic filter.

The first filtration element is adapted for being tightly fitted to a holder which is provided at the top of the cartridge body. Typically, the holder is an integral portion of the cartridge body.. In particular embodiments, the first filtration element is adapted to be tightly fitted to the holder via a flexible seal which is a part separate from the cartridge body. The flexible seal may be made from any suitable flexible material which is compatible with drinking water. For example, the flexible seal is a flexible silicone, rubber, or latex seal, more particularly a flexible silicone seal.

The flexible seal is kept in its predetermined position by the holder. For this purpose, the holder which may comprise one or several protrusions extending from the upper portion of the sidewall directed inwardly.

In particular embodiments, the flexible seal is formed as an integral structure comprising a first sub-structure adapted to be placed on the holder and a second sub-sub-structure adapted to be tightly fitted to the first filtration element. In certain embodiments, the first sub-structure is formed as a base having an opening for providing water flow from the first filtration element to the pressure equalization chamber below. In certain embodiments, the second sub-structure comprises at least one lip, e.g. an outer lip and an inner lip circumferentially extending upward from the base such the first filtration element can be tightly fitted to the at least one lip, e.g., between the outer and the inner flexible lip. A lip, e.g., the outer lip may be provided with openings to allow water flow into the first filtration element.

The second filtration element has a necessarily higher water permeability than the first filtration element and may comprise one or several materials suitable for water purification. In certain embodiments, the second filtration element is positioned within the filtration cartridge, particularly within a chamber positioned below the pressure equalization chamber. The chamber is defined by suitable support structures, e.g., horizontal water-permeable support structures above and below the second filtration element and optionally at least one vertical support structure.

The second filtration element may comprise one or several filter materials selected from the group comprising an adsorbent including activated carbon, silver-impregnated activated carbon, zeolite and diatomaceous earth, an ion exchanging resin including an anion exchanging resin, a cation exchanging resin and a mixed bed resin, a mineralization media including calcium carbonate, e.g., dolomite, limestone and/or marble, magnesium oxide, and sintered glass, a metal-based filter medium including KDF-55 (copper-zinc alloy) and manganese greensand, a bio-ceramic material including FIR ceramic, tourmaline, alkaline ceramic and EM ceramic and a natural filtering material including quartz sand, active sand and clay filter granules, and any combination thereof.

In certain embodiments, the second filtration element may comprise two or more separate layers of different materials, e.g., different filter materials. In such embodiments, the chamber of the second filtration element may comprise several individual compartments, particularly in horizontal arrangement wherein the individual compartments may comprise different materials, e.g., different filter materials. The individual compartments may be separated by water-permeable horizontal support structures and optionally held by vertical support structures. For example, the chamber of the second filtration element may comprise an upper compartment and a lower compartment separated by a water-permeable support structure. In certain embodiments, the lower compartment may comprise a water-enriching element, e.g., a mineralization element.

In certain embodiments, the filtration cartridge comprises at its bottom an optional connection port for adding further features to the cartridge, e.g., further filtration elements.

The filtration cartridge as described above may be inserted into a suitable device, e.g., a dispenser or a jug, e.g., a glass or plastic jug.

Accordingly, the present invention also relates to a device for purifying water comprising a filtration cartridge as described above. Typically, the device comprises a hopper, i.e., an upper tank for receiving unfiltered water, from a flow path to the first filtration element of the cartridge is provided. Filtered water exiting from the cartridge may be collected in a storage tank for receiving filtered water from the filtration cartridge.

The cartridge and device are particularly useful for purifying water for drinking purposes.

Further, a method for purifying water is provided, comprising passing water through a cartridge as described above and collecting the purified water exiting from the filtration cartridge. Particularly, the water is water for drinking purposes.

Still a further aspect the present invention relates to a flexible seal, particularly a flexible silicone seal as herein described above for attaching a filtration element, particularly a ceramic filter, to the top of a filtration cartridge, particularly a filtration cartridge as herein described above, or a filtration cartridge without opening in the side wall.

Still a further aspect the present invention relates to a microporous filter, particularly a ceramic filter adapted for attachment to a filtration cartridge via a flexible seal, particularly a flexible seal as herein described above. In certain embodiments the ceramic filter has a hollow dome-like shape with an annular base which preferably ends with a plain face. In particular embodiments, the annular base is adapted for being fitted directly between two upwardly extending lips of the flexible seal.

In the following, certain embodiments of the invention shall be explained in more detail by reference to the enclosed Figures, however without being limited thereto.

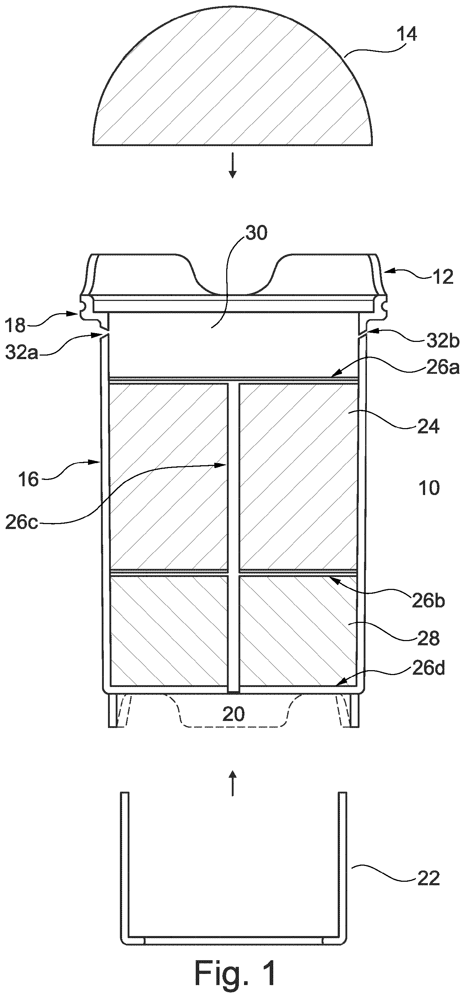

**Figure 1** shows a cross-sectional side view of a gravity-based filtration cartridge of the present invention. The cartridge comprises a cartridge body (10) which is typically made of hard plastic. At the top of the cartridge body (10) a holder (12) is provided. The holder (12) is adapted for receiving a first filtration element (14) which may be removably attached to the cartridge body. The cartridge further comprises a side wall (16) circumferentially enclosing the inside of the cartridge body (10). On the outside of the sidewall (16), a sealing element, e.g. an annular protrusion (18) may be provided to ensure water tightness when the filtration cartridge is placed within a container. Further, the filtration cartridge may comprise at its bottom a connection port (20) for connecting the cartridge to an optional further element (22).

The first filtration element (14) is the uppermost filtration element of the cartridge and receives unfiltered water. It can be removably attached to the cartridge body (10) and can be tightly fitted to the holder (12), particularly by a flexible seal (not shown).

The filtration cartridge further comprises a second filtration element (24) for receiving water from the first filtration element (14). The second filtration element (24) is positioned in a chamber within the cartridge body (10) which is defined by an upper horizontal water-permeable support structure (26a) a lower horizontal water-permeable support structure (26b) and the sidewall (16). In the depicted embodiment, an optional vertical support structure (26c) is present.

In the depicted embodiment, a further element (28) is positioned below the second filtration element (24). The further element (28) may be a part of the second filtration element (24), e.g., a further individual filtration layer, or it may be another element, e.g., a water enriching element, e.g., a mineralization element. Below the further element (28), a further horizontal water-permeable support structure (26d) is provided.

The water permeability of the first filtration element (14) is lower than the water permeability of the second filtration element (24). In order to avoid an undesired pressure difference within the filtration cartridge during use, a pressure equalization chamber (30) is provided below the first filtration element (14) and above the second filtration element (24). The pressure equalization chamber (30) comprises one or more openings (32a, 32b) extending from the chamber (30) through the side wall (16) such that pressure equalization between the chamber and the outside of the cartridge body is provided. The opening (32a, 32b) in the side wall (16) may be positioned in the upper portion of the chamber (30) such that it is above the usual water level in the chamber (30) and outflow of water through the sidewall (16) is reduced or prevented during use.

The opening (32a) has a conical shape wherein the diameter of the opening increases in the direction from the inside to the outside of the sidewall (16). The opening (32b) is directed upwards from the inside to the outside of the sidewall (16). The invention also encompasses an embodiment wherein the opening has both an outwardly increasing diameter and is directed upward.

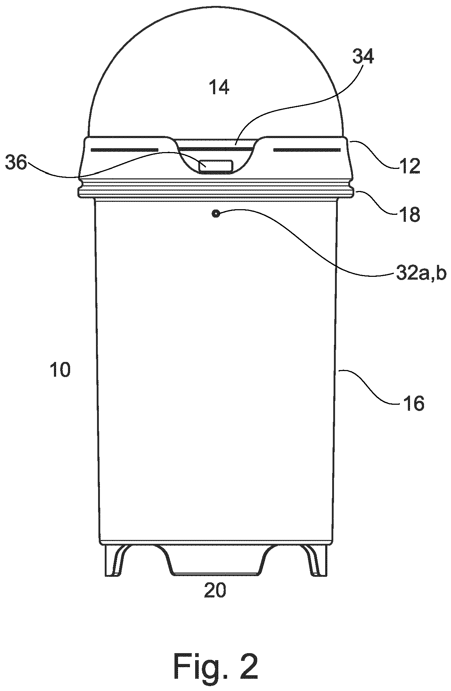

**Figure 2** shows a side view of a gravity-based filtration cartridge with an installed first filtration element. The first filtration element (14) is attached to a holder (12) at the top of the cartridge body (10). The attachment is provided by a flexible seal (34) having a hole (36) to allow water flow into the first filtration element (14). Further, the sidewall (16) of the cartridge body (10) with an opening (32a,b) and a connection port (20) are shown.

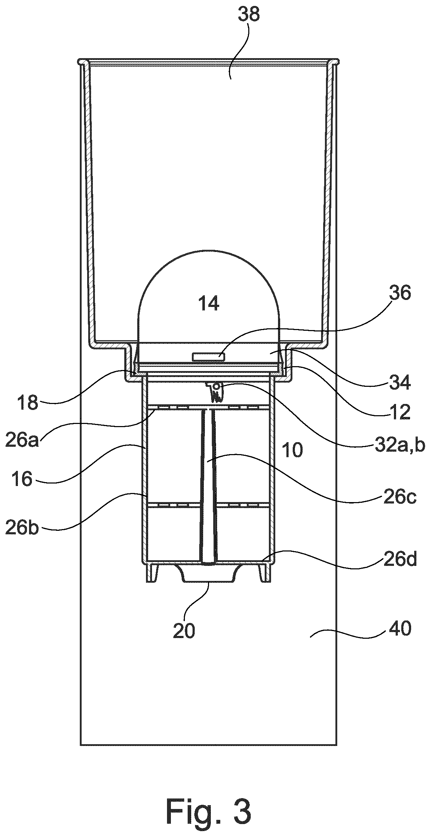

**Figure 3** shows a partly cross-sectional side view of a gravity-based filtration cartridge inserted into a container. The cartridge body (10) with a holder (12), a sidewall (16) and an opening (32a,b) in the sidewall, and a connection port (20) are shown. The first filtration element (14) is attached to the holder (12) via a flexible seal (34) having a hole (36).

Further, horizontal water permeable support structures (26a, 26b, 26d) and a horizontal support structure (26c) for the second filtration element within the cartridge body are shown.

The cartridge is placed in a container comprising a hopper (38) into which unfiltered water is filled in. The hole (36) in the flexible seal (34) provides waterflow into the first filtration element (14) at the lowest point in the hopper. A silicone ring (18) is placed between the cartridge body (10) and the hopper (38) to ensure water tightness.

Further, the device comprises a storage tank (40) for collecting filtered water exiting from the cartridge.

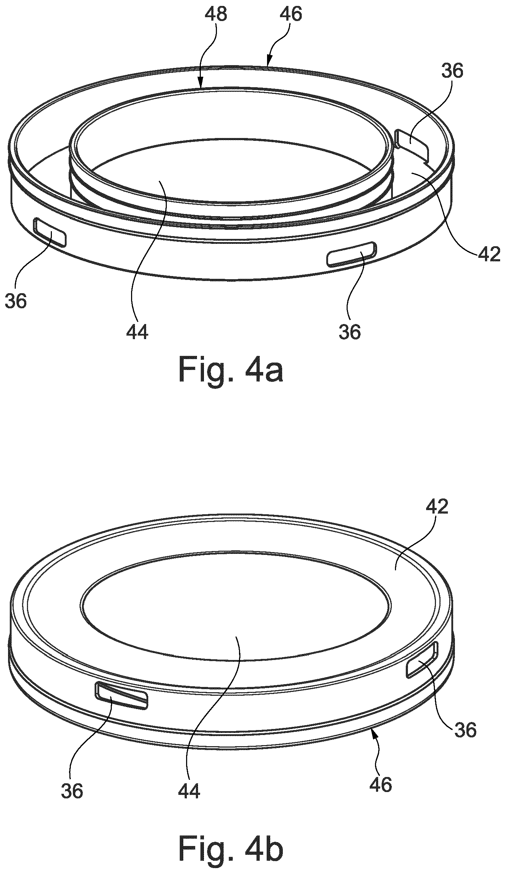

**Figures 4a and 4b** show a flexible seal which is positioned between the first filtration element and the holder of the cartridge body. Figure 4a is a view from the top and figure 4b is a view from the bottom.

The flexible seal is formed as an integral structure comprising a base (42) having an opening (44), e.g.- a central opening, for providing waterflow from the first filtration element to the pressure equalization chamber below. Further, the seal comprises an outer lip (46) and an inner lip (48) circumferentially extending upward from the base (42) such that the first filtration element can be tightly fitted between the two lips. In the outer lip a hole (36) is provided to allow waterflow from a hopper into the first filtration element.

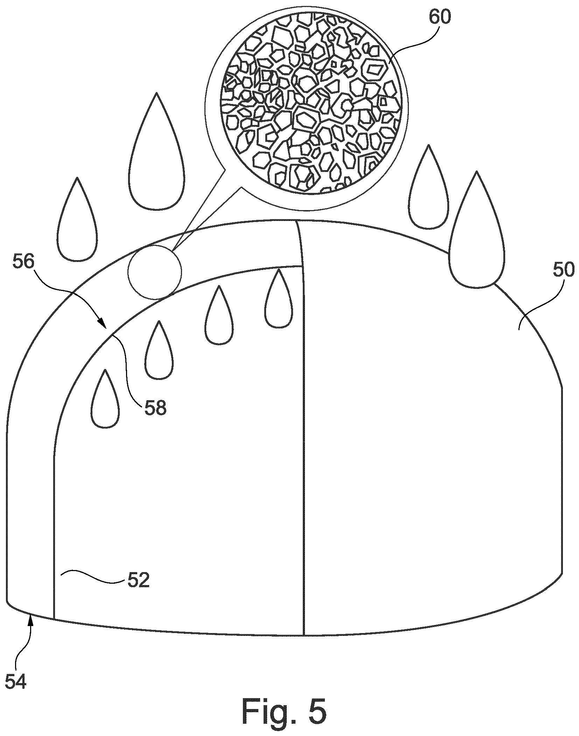

**Figure 5** shows a partially cross-sectional sideview of a ceramic filter (50) as a preferred embodiment of the first filtration element. The ceramic filter (50) has a hollow dome-like shape with an annular base (52) which may end with a plain lower face (54). Water enters the filter from the outer side of the dome (56) passes through the filter and exits from its inner side (58). Further, an enlarged section (60) of the filter with its pore structure is shown.

In preferred embodiments, the annular base (52) of the ceramic filter (50) is not provided with a mounting element for attachment to a filtration cartridge. Instead, the annular base (52) is adapted for attachment to a filtration cartridge via a flexible seal as shown in Figures 4a and 4b, e.g. a silicone seal. For this purpose, the annular base (52) can be fitted directly between the outer lip (46) and the inner lip (48) of the seal.

## Claims

1. A gravity-based water filtration cartridge comprising:
- a cartridge body (10) comprising a holder (12) at its top for attachment of a first filtration element (14), a sidewall (16) enclosing the cartridge body (10), and optionally a connection port (20) at its bottom;
- a first filtration element (14) for receiving unfiltered water, wherein the first filtration element is attached to the holder (12);
- a second filtration element (24) for receiving water from the first filtration element (14), wherein the second filtration element (24) is positioned within the cartridge body (10) and wherein the water permeability of first filtration element (14) is lower than the water permeability of the second filtration element (24); and
- a pressure equalization chamber (30) within the cartridge body (10) below the first filtration element (14) and above the second filtration element (24) wherein the sidewall (16) enclosing the chamber (30) comprises at least one opening (32a, 32b) extending from the chamber (30) through the sidewall (16) such that pressure equalization between the chamber (30) and the outside of the cartridge body (10) is provided.

2. The cartridge of claim 1, wherein the first filtration element (14) comprises a microporous filter having a pore size of about 100 µm or less, particularly about 0.1 to about 50 µm and more particularly about 0.4 to about 20 µm, e.g. about 10 µm.

3. The cartridge of claim 1 or 2, wherein the first filtration element (14) is a ceramic filter.

4. The cartridge of any one of claims 1-3, wherein the first filtration element (14) is attached to the holder (12) via a flexible seal (34), particularly via a flexible silicone seal.

5. The cartridge of claim 4, wherein the flexible seal (34) is an integral structure comprising:
- a first sub-structure (42) adapted to be placed on the holder (12), wherein the base has an opening (44) for providing water flow from the first filtration element (14) to the pressure equalization chamber (30), and
- a second sub-structure (46, 48) adapted to be tightly fitted to the first filtration element (14).

6. The cartridge of claim 5, wherein the second sub-structure comprises an outer flexible lip (46) and an inner flexible lip (48) circumferentially extending upwards from the first sub-structure (42) such the first filtration element (14) can be tightly fitted between the outer flexible lip (46) and the inner flexible lip (48), and optionally wherein the outer flexible lip (46) is provided with at least one opening (36).

7. The cartridge of any one of claims 1-6, wherein the at least one opening (32a, 32b) in the sidewall (16) is positioned in the upper portion of the pressure equalization chamber (30) such that outflow of water through the sidewall (16) is reduced and/or prevented.

8. The cartridge of any one of claims 1-7, wherein the at least one opening (32a, 32b) has a diameter of about 1 mm or less on the inside of the sidewall (16).

9. The cartridge of any one of claims 1-8, wherein the at least one opening (32a) has a diameter which increases in the direction from the inside to the outside of the sidewall (16).

10. The cartridge of any one of claims 1-9, wherein the at least one opening (32b) is directed upwards from the inside to the outside of the sidewall (16).

11. The cartridge of any one of claims 1-10, wherein the pressure equalization chamber (30) comprises an additional filtration element, particularly a limescale filter.

12. The cartridge of any one of claims 1-11, wherein the second filtration element (24) is positioned in a chamber within the cartridge body (10) which is defined by an upper horizontal water-permeable support structure (26a) a lower horizontal water-permeable support structure (26b) and the sidewall (16) and optionally wherein a vertical support structure (26c) is present.

13. The cartridge of any one of claims 1-12, which has an overall flow-through capacity of about 3 to 18 I per hour (based on a size of 44 cm²).

14. A device for purifying water comprising a hopper (38) for receiving unfiltered water, a filtration cartridge of any one of claims 1-12 for receiving water from the hopper, and a storage tank (40) for receiving filtered water from the filtration cartridge.

15. A method for purifying water, particularly water for drinking purposes, comprising passing water through a filtration cartridge of any one of claims 1-12 and collecting the filtered water.
